# EUROPEAN PATENT SPECIFICATION

(11) **EP 1 207 605 B1**
(45) Date of publication and mention of the grant of the patent: **27.07.2011**
(21) Application number: 01610117.2
(22) Date of filing: 20.11.2001
(51) Int. Cl.: H02G 3/30, H02G 1/00

(54) **A method of providing walls with concealed ducts for receiving electrical components**
Verfahren zur verdeckten Einbringung von Kanälen für elektrische Komponenten
Methode d'installation de conduites pour composants électriques, cachées dans des cloisons

(30) Priority: 20.11.2000 DK 200001741
(43) Date of publication of application: 22.05.2002
(73) Proprietor: Schneider Electric Danmark A/S, 2750 Ballerup (DK)
(72) Inventor: Madsen, Kaj Fischer, 2950 Vedbaek (DK)
(74) Representative: Wittrup, Flemming

(56) References cited:
- US-A- 6 023 893

## Description

The invention relates to a method of providing a wall with a concealed installation for receiving electrical components which extend a distance into the concealed installation, said wall comprising a plurality of covering plates and supporting structural elements.

In an electrical domestic or industrial installation, electrical equipment is to be mounted in the walls, as the associating wiring system is run in the concealed installation. DE-A-33 43 651 and US-A-6023893 disclose an electrical installation system which serves to facilitate the mounting of the electrical components in the building. It is well known that some wasted time is involved by the individual trades having to wait for each other at a building site, as it is difficult to coordinate the processes, and this problem has not been solved by the prior art, far from it.

The object of the invention is to make the installation work more efficient and flexible, so that e.g. carpenters, painters and electricians can work more independently of each other, while the ever increasing international trade in building elements is not impeded by national standards for the electrical components.

This object is achieved by mounting an extended duct system on the structural elements before the wall is finish covered, and in such a position relative to the structural elements that the side of the duct facing toward the covering plates is substantially flush with the internal side of a covering plate, by covering the walls, and by drilling the concealed ducts through the covering. After drilling, it is extremely easy to mount the electrical components arbitrarily within the extent of the duct, e.g. by means of the technique which is described in Danish Patent Application No. 1015 from 1999.

The equipment e.g. comprises electrical components and associated mounting frames which extend into the duct. Hereby, the electrical component having the greatest depth will define a minimum depth for the ducts.

The ducts hereby obtain a minimum depth, which has frequently been a problem when, in practice, the ducts have to intersect the structural elements that support the covering plates, where steel studs or wooden studs are typically used. The minimum depth of the ducts may be so great as to weaken the studs to an unacceptable degree. This drawback is avoided by an embodiment of the invention where the duct depth is reduced at intersecting studs or the like.

This particularly advantageous embodiment is based on the finding that the minimum depth required by the electrical components is noticeably greater than the depth required for cables and wires to be run through the ducts. Therefore, the duct depth may readily be reduced at the structural elements, which may e.g. be done by means of special duct reducing members.

In principle, nothing prevents the ducts from being drilled at the reduced areas, if the purpose is to position an electrical component which does not occupy much space in depth. When it is a matter of components occupying more space in depth, the ducts are drilled between the duct reducing members where the duct depth is sufficient.

When the depth of the duct reducing members is reduced, they may be received in milled cut-outs or depressions in a wooden or steel stud, without the strength of the stud being reduced unacceptably.

Alternatively, a hole may be provided in the stud for receiving a duct connecting member, which may be with or without depth reduction. In the event that steel studs are used, it may be expedient to use a cutting tool having a spacer for setting the cutting height above floor, as electrical installation ducts are preferably to be established at a predetermined height above floor. In case of partition walls, a uniform duct height is desired on both sides of the wall, and in case of thin walls it may therefore be expedient to use ducts which fit in thickness between the covering plates, and in case of thick partition walls there may be two ducts at each other with respective holes and duct reducing members in the studs. This ensures according to the invention that the extended duct engages a wall plate.

By an alternative embodiment the mounting frame/component may extend through the concealed duct such that the duct can be made with a smaller depth, eg corresponding to the thickness of an internal covering layer that may adjoin the duct and be flush therewith when the duct is located on the outside of the supporting constructive elements. Then it is possible to arrange an external layer of covering plates that covers the duct and is to be drilled-through from the outside. This embodiment entails independence of the build-in depths of the electrical components and makes it easy to arrange insulating batts in the cavity of the wall.

When the duct connecting members have been secured to the studs, it may be expedient to use duct members having modular lengths, so that the duct members may be utilized for defining the mutual distance between transverse studs, so that the distances of the these match the dimensions of the covering plates used. For other uses, it may be expedient to use telescopic duct members.

The invention will now be explained more fully by the following description of some embodiments with reference to the drawing, in which
Figure 1 shows a first embodiment of the invention,
Figure 2 shows an example of an extended duct system which may be provided by performing the method according to the invention,
Figure 3 shows another embodiment of the invention,
Figures 4 - 6 show expedient details of other embodiments of the invention,
Figure 7 shows a tool for use in connection with the method according to the invention, while
Figures 8 and 9 show further embodiments of the invention.

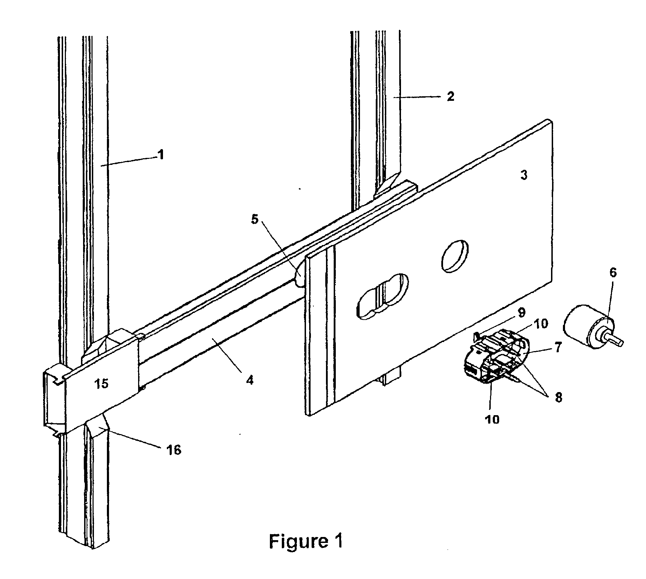

Figure 1 shows a pair of steel studs 1 and 2, which, together with other studs, including top and bottom studs, are adapted to form the framework for a plate wall. Plate covering may e.g. consist of plaster plates like the one shown at 3 in the figure.

According to the invention, there is disclosed a method of providing walls with concealed ducts, e.g. of the type which is indicated at 4 in figure 1. According to the invention, simultaneously with the erection of the supporting studs there is provided an extended duct system, which may be drilled anywhere after the wall plates 3 have been mounted. This is indicated by means of the exploded view in figure 1, where the plate covering 3 has been spaced from the supporting framework, so that the viewer can faintly see the hole 5 which is provided by drilling after the plate 3 has been mounted on the frame- work. The drilling is outlined at the drill 6 which can e.g. make a hole for an electrical switch. A mount for an elongated mounting box 7 may be provided by means of several juxtaposed holes. The mounting box 7 is of the type which has a pair of clamping straps 8 having respective barbs 9 which, upon clamping, engage the inner side of the duct 4, so that the box 7 is fixed, said box 7 also having a pair of engagement faces 10 which engage the external side of the plate 3. This form of mounting is shown in greater detail in the Danish Patent Application No. 1015 from 1999.

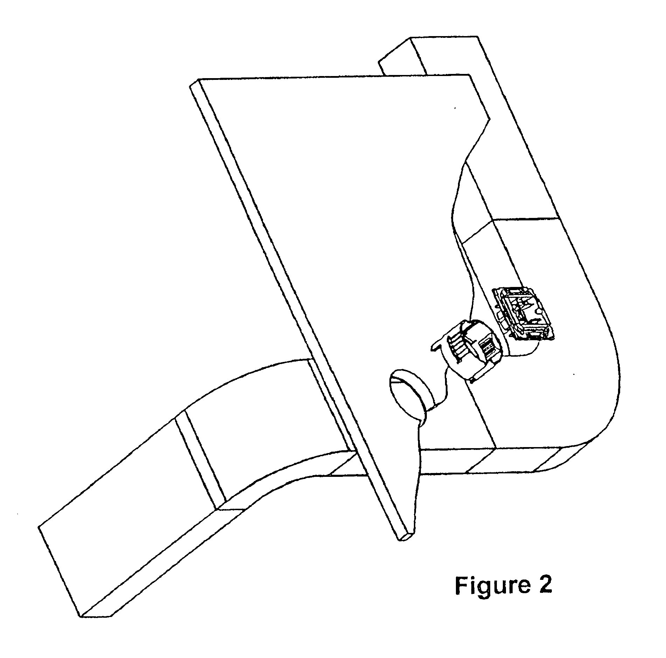

Thus, an extended duct may be provided at the same time as the support of the wall plates is built, before the wall plates are mounted. Then the wall may be drilled anywhere at the duct, as shown in figure 2, which also shows a mounting box and a switch to be mounted in the wall and the duct. The method according to the invention indicates how the ducts may be established in practice in the wall by the skilled persons who erect studs and wall plates, thereby avoiding the need for electricians before the wall has been finished, optionally also painted, and thereby also making it easy for the electricians to finish-mount the wall.

The method presupposes that it is possible to find the duct behind the plate covering, which may be done in several ways. One of the ways is to mark on the plate covering where the duct is located, before the plates are secured. Another method is to incorporate magnets in the ducts, said magnets being used for centering the drill 6 or guiding a jig in another manner. Alternatively, the ducts may be provided with electrically detectable means, e.g. an aluminium strip, so that the duct may easily be found and drilled.

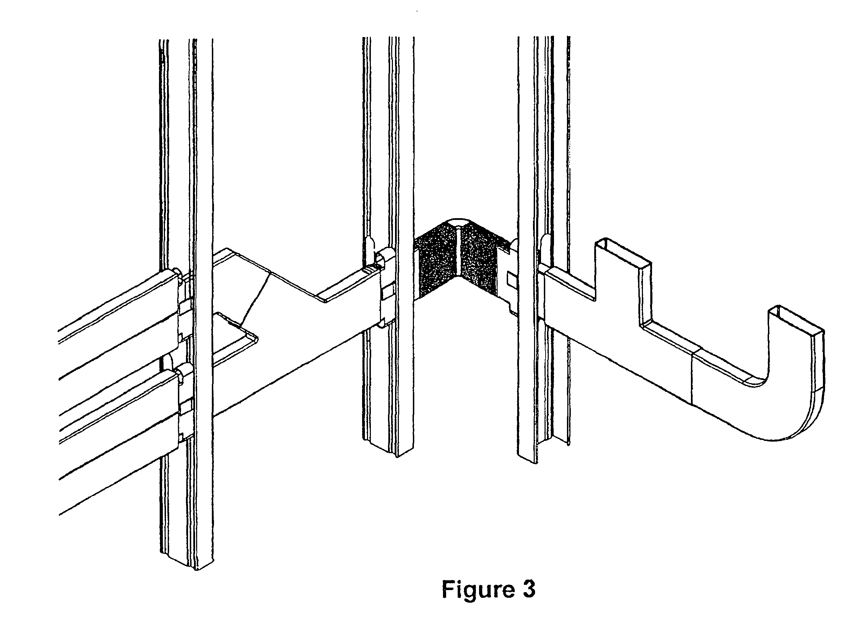

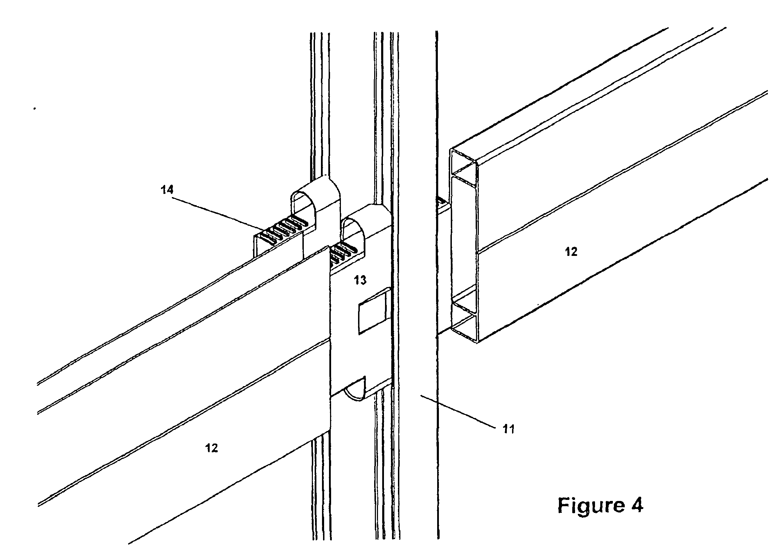

Figure 3 shows an example of how an extended duct system of the type shown in figure 1 or 2 may be provided in a wall before the wall plates are mounted, so that the duct will engage the rear side of a wall plate. Figure 4 shows details of how the duct may be provided in practice by means of duct members 12, which have been connected by means of duct connecting members 13 and 14. The duct connecting members extend through holes in e.g. a steel stud 11. Figure 4 shows two duct connecting members 13 and 14 pulled out at their respective sides of the stud 11, which is expedient when drilling is to be performed from both sides of the wall into a duct system. The duct system shown in figure 3 can only be drilled from one side of the wall in practice.

A particularly expedient embodiment of the invention comprises the features that duct connecting members are provided at all studs, and that the depth of the duct connecting members is reduced relative to the depth of the duct in general. This appears from figure 1, as the duct connecting member 15 has a depth such that the external measure, measured transversely to the stud 1, corresponds to the depth of a depression 16 in the stud. Hereby, according to the invention, the plate 3 engages both the studs and the side of the duct 4 facing toward the plate 3. This embodiment is advantageous, because it is not necessary to weaken the studs very much. This solution is related to the finding that the depth required by e.g. the box 7 in order to be received in the duct 4 is greater than the depth which is necessary to run wires and cables in the duct. Thus, the invention is based inter alia on the finding that there is sufficient space for cables and wires even though the duct is reduced at the studs. Thus, it is not possible to drill for electrical installation equipment which requires a great mounting depth at the studs, which, however, does not prevent drilling for equipment that does not require any noticeable depth. If such drilling is to be performed, it should be performed at the top of the duct, as the wires will be disposed at the bottom of the duct.

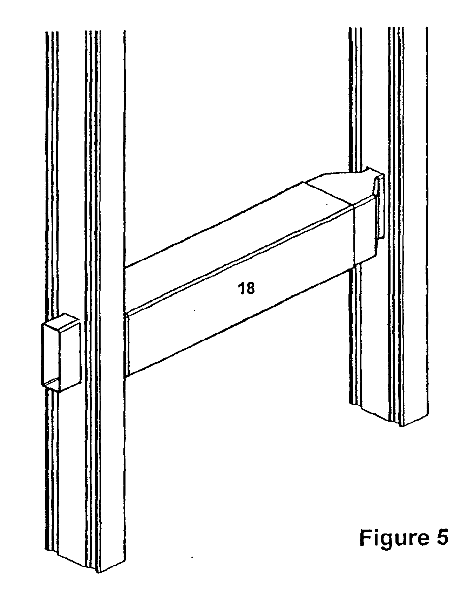

Fig. 5 shows a variant where a duct member 18 has a greater depth, measured transversely to the wall, than the depth of the duct connecting members. This variant is expedient in a relatively narrow wall where access is desired to the duct from the opposed sides of the wall. In case of a wider wall, the embodiment shown in figure 4 is more expedient. It will also be appreciated that in case of quite special electrical equipment requiring additional depth, it is possible to use duct members where one or both of the opposed sides are pulled out relative to the sides of the duct connecting members, depending on where the bore through the stud has been made.

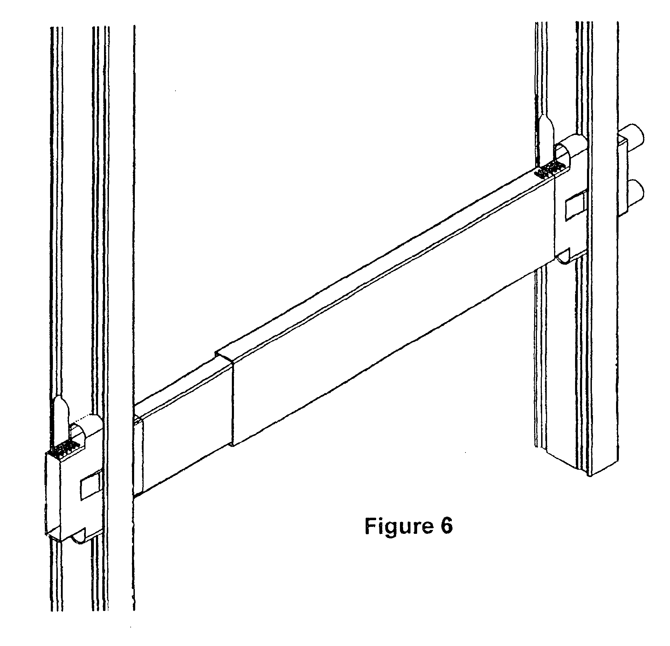

Figure 6 shows duct connecting members and studs of the type where a telescopic duct system is used, thereby making it even easier to establish an extended duct system in a wall according to the invention, so that the duct system adjoins the rear side of a wall plate, thereby making it very easy to finish-mount the wall.

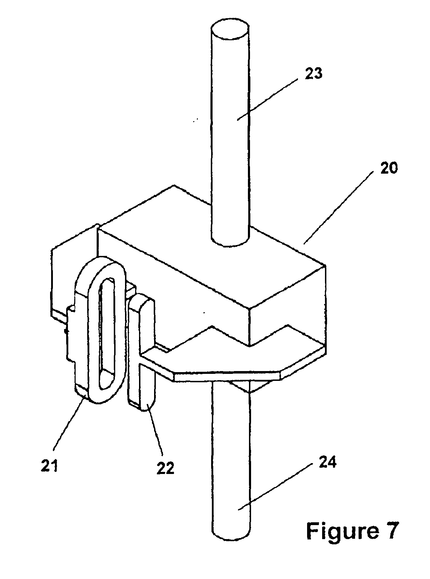

Steel studs may be supplied with holes at predetermined places, but it is far from certain that they are positioned precisely as is desired in the finished wall. Therefore, it may be an advantage that the holes in the studs are provided simultaneously with the erection of the studs, and for this purpose a cutting tool 20, which is shown in figure 7, is used. The cutting tool comprises cooperating cutting jaws 21 and 22 which may be activated manually or automatically, and moreover a handle 23 as well as an adjustable leg 24 are provided, said leg being adjustable such that the jaws 21, 22 cut a hole in the stud at the proper height. The tool may be turned so that what is designated 23 becomes the leg, and what is designated 24 becomes the handle, so that it will be the jaw 22 that extends into the bottom of the "U" which corresponds to the cross-section of the stud, in order for the hole in the stud to be disposed as close as possible to the outer side of the stud, so that the duct according to the invention may engage the internal side of the covering plates.

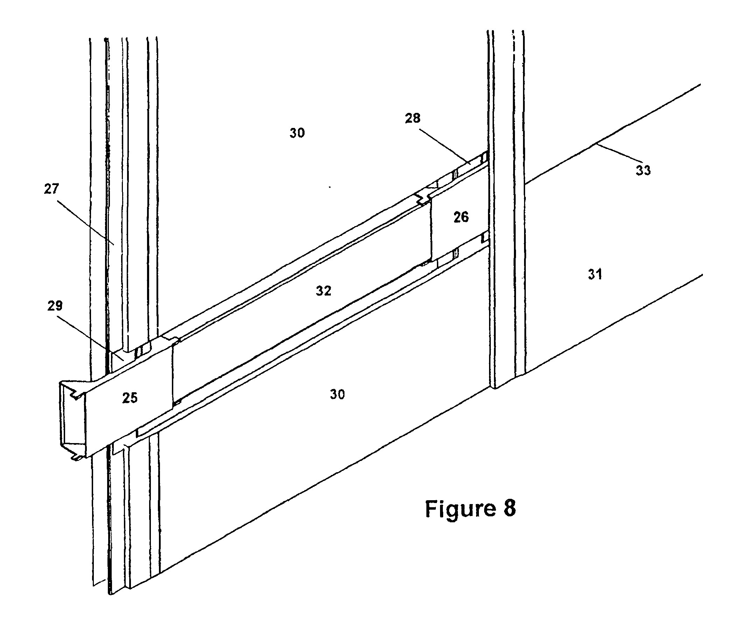

Figure 8 shows a variant where the duct connecting members 25, 26 are disposed at depressions, shown. at 29, in the side of the stud 27. The depressions may be made with different depths, but by using duct connecting members 25, 26 which also have a reduced depth at the stud it may be ensured that the depression 29 in the steel stud need not be very deep, and thereby does not weaken the stud very much. It will be appreciated that milled cut-outs in a wooden stud may equally well be involved. The depressions 29 in the stud may have been made in advance in the manufacture of the stud or may be made at the building site by means of a special pressing tool like the cutting tool shown in figure 5. Figure 8 also shows how covering plates are mounted, e.g. plaster plates on the studs 27 and 28. The structure shown comprises two layers of plates 30 and 31, where the depression depth in the stud 27 and the depth reduction in the duct connecting member 25 are dimensioned such that the external side of the duct is flush with the external side of the plate. When the outer plate 31 is mounted externally on the plate 30, its internal side engages the duct according to the invention, so that it is convenient to mount electrical installation equipment.

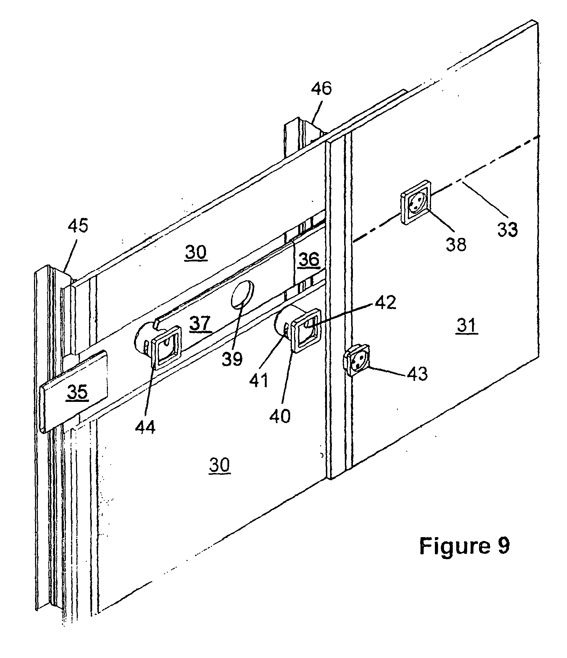

Figure 9 shows a further embodiment that features steel studs 45 and 46, on the outside of which are arranged duct connecting pieces 35 and 36 that are connected to each other by means of a duct spacer element 37. By this embodiment the thickness of the duct parts 35, 36 and 37 substantially equals the thickness of the two shown plate elements 30 that constitute the innermost layer of a two-layer covering. In figure 9, the plates are shown at a certain distance from the duct for the sake of overview, but in practice the plate elements 30 will adjoin the duct and be flush therewith, whereby an external plate 31 can be arranged that is, in this manner, caused to abut in a flush manner both on the plates 30 and on said duct elements. By this embodiment it is particularly easy to locate insulating batts in the wall cavity, in particular when it is desired to have an installation duct to both sides of the wall at the same height.

Figure 9 also shows a wall outlet 38 that is flushly countersunk in the external covering plate 33. This mounting is shown in an exploded view in Figure 9 that also shows a through-going hole 39 in the opposed sidewalls of the duct 37. By 40 is designated a mounting box according to the invention that can be received in the hole 39 and that has openings 41 and 42 that are arranged precisely in such depth that the holes are caused to flush with the duct cavity when the mounting box is arranged on the outside of the final plate layer that covers the plates 30 and the duct 37. This will appear from Figure 9 by the box 44 that is mounted such that the holes are flush with the duct cavity and such that the box extends outwards from the duct and into the wall cavity. Then the electrical component 43 can be arranged in the mounting box, the connecting cords from the concealed duct 37 extending through the holes 41, 42 in such a manner that they can be connected to the component 43.

A further expedient feature of the invention is that the duct connecting members 25 and 26 may be arranged on the respective studs so that the duct member 32 shown serves as a spacer between the studs 27 and 28 and may be used for maintaining a predetermined modular distance between the studs 27 and 28. The attachment may take place in various ways, e.g. screws, quick couplings, etc. This additionally facilitates the erection in practice.

To ensure that the duct is arranged at the proper height above floor, the covering plates 31 may be provided with a marking 33 to which the height of the cutting tool and optionally of the pressing tool may be adjusted. This means that after mounting of the plate 31 it is certain that the duct is arranged in a well-defined position relative to the marking or the bar 33, so that it is easy to drill the duct anywhere.

## Claims

1. A method of providing a wall with a concealed installation for receiving electrical components which extend a distance into the concealed installation, said wall comprising a plurality of covering plates (3,30,31) and supporting structural elements, **characterized by** mounting an extended duct system on the structural elements before the wall is finish-covered and in such a position relative to the structural elements that the side of the duct (4,12,18,32,37) facing toward to the covering plates is substantially flush with the internal side of a covering plate (3,30), by covering the walls, and by drilling the concealed ducts through the covering.

2. A method according to claim 1, wherein the electrical components define a minimum depth for the ducts (4,12,18,32,37), **characterized by** reducing the duct depth at intersecting structural elements.

3. A method according to claim 2, **characterized by** using duct reducing members having a duct depth which is smaller than said minimum depth.

4. A method according to claim 3, **characterized by** drilling the ducts (4,12,18,32,37) at the greatest depth.

5. A method according to claim 1, **characterized by** drilling the ducts (4,12,18,32,37) through a pair of its opposed sides that are substantially parallel to the covering plates (3,30,31).

6. A method according to claims 1-5, **characterized by** using two layers of covering plates (30,31) such that the duct (32) is substantially flush with the internal side of the external one of these covering plates (30,31).

7. A method according to claims 1-4 **characterized by** using steel studs (1,2,11,27,28,45,46) which have local depressions (16,29) for receiving a duct member (4,32) completely or partly.

8. A method according to claims 1 - 4, **characterized by** using wooden studs, and by producing a groove in the wooden stud for receiving a duct member completely or partly.

9. A method according to claims 1 - 4, **characterized by** providing a hole in the stud between its sides facing toward the covering, and by mounting a duct member (18) in the hole.

10. A method according to claim 9 wherein the stud is a steel stud, **c**h**ara cter**i**zed** by using a cutting tool (20) having a spacer for setting the cutting height above floor.

11. A method according to claims 1 - 10, **characterized by** using duct members having modular lengths which are adapted to the mutual distances of the structural elements.

12. A method according to claims 1 - 10, **characterized by** using telescopic duct members.

13. A method according to claim 1, **characterized by** using magnets in the ducts for centering the drilling.

14. A method according to claim 1 or 9, **characterized by** using a jig for drilling holes for the mounting frames.

15. A method according to claim 1, **characterized by** providing the external side of the covering plate (31) with a marking (33) for use for the drilling.

## Patentansprüche

1. VerFahren zur Bereitstellung einer Wand mit einer verdeckten Einbringung zur Aufnahme von elektrischen Komponenten, die in einer Distanz in die verdeckte Einbringung hineinragen, wobei die Wand eine Vielzahl von Abdeckungsplatten (3, 30, 31) und tragende Bauelemente umfasst, **gekennzeichnet durch** Montage eines erweiterten Kanalsystems auf den Bauelementen, bevor die Wand fertig bedeckt ist, und in einer solchen Position in Bezug auf die Bauelemente, dass die den Abdeckungsplatten zugewandte Seite des Kanals (4, 12, 18, 32, 37) im Wesentlichen mit der Innenseite einer Abdeckungsplatte (3, 30) bündig ist, **durch** Abdeckung der Wände, und **durch** Bohren der verdeckten Kanäle **durch** die Abdeckung.

2. Verfahren nach Anspruch 1, wobei die elektrischen Komponenten eine Mindesttiefe für die Kanäle (4, 12, 18, 32, 37) definieren, **gekennzeichnet durch** Reduktion der Kanaltiefe an kreuzenden Bauelementen.

3. Verfahren nach Anspruch 2, **gekennzeichnet durch** Verwendung von eine Kanaltiefe aufweisenden Kanal-Reduktionsteilen, welche kleiner ist als die Mindesttiefe.

4. Verfahren nach Anspruch 3, **gekennzeichnet durch** Bohren der Kanäle (4, 12, 18, 32, 37) bei der größten Tiefe.

5. Verfahren nach Anspruch 1, **gekennzeichnet durch** Bohren der Kanäle (4, 12, 18, 32, 37) **durch** ein Paar von seinen im Wesentlichen zu den Abdeckungsplatten (3, 30, 31) parallelen gegenüberliegenden Seiten.

6. Verfahren nach den Ansprüchen 1-5, **gekennzeichnet durch** Verwendung zweier Schichten von Abdeckungsplatten (30, 31 so dass der Kanal (32) im Wesentlichen mit der Innenseite der Außenseite von diesen Abdeckungsplatten (30, 31) bündig ist.

7. Verfahren nach den Ansprüchen 1-4, **gekennzeichnet durch** Verwendung von Stahlstegen (1, 2, 11, 27, 28, 45, 46), welche örtliche Vertiefungen (16, 29) zur vollständigen oder teilweisen Aufnahme eines Kanalteils (4,32) aufweisen.

8. Verfahren nach den Ansprüchen 1-4, **gekennzeichnet durch** Verwendung von Holzstegen und **durch** Herstellung einer Nut im Holzsteg zur vollständigen oder teilweisen Aufnahme eines Kanalteils.

9. Verfahren nach den Ansprüchen 1-4, **gekennzeichnet durch** Bereitstellung eines Lochs im Steg zwischen seinen der Abdeckung zugewandten Seiten und **durch** Montage eines Kanalteils (18) im Loch.

10. Verfahren nach Anspruch 9, wobei der Steg ein Stahlsteg ist, **gekennzeichnet durch** Verwendung eines ein Distanzstück zur Einstellung der Schnitthöhe über dem Boden aufweisenden Schneidwerkzeugs (20).

11. Verfahren nach den Ansprüchen 1-10, **gekennzeichnet durch** Verwendung von Kanalteilen, die an die gegenseitigen Abstände der Bauelemente angepasste modulare Längen aufweisen.

12. Verfahren nach den Ansprüchen 1-10, **gekennzeichnet durch** Verwendung teleskopischer Kanalteile.

13. Verfahren nach Anspruch 1, **gekennzeichnet durch** Verwendung von Magneten in den Kanälen zum Zentrieren des Bohrens.

14. Verfahren nach Anspruch 1 oder 9, **gekennzeichnet durch** Verwendung einer Spannvorrichtung zum Bohren von Löchern für die Montagerahmen.

15. Verfahren nach Anspruch 1, **gekennzeichnet durch** Versorgung der Außenseite der Abdeckungsplatte (31) mit einer Markierung (33) zur Verwendung für das Bohren.

## Revendications

1. Méthode pour fournir un mur avec une installation cachée pour recevoir des composants électriques qui s'étendent à une distance dans l'installation cachée, ladite paroi comportant une pluralité de plaques de recouvrement (3, 30, 31) et des éléments de construction portants, **caractérisée par** le montage d'un système de conduit étendu sur les éléments de construction avant la couverture de finition de la paroi et dans une telle position par rapport aux éléments de construction que le côté du conduit (4, 12, 18, 32, 37) orienté vers les plaques de recouvrement est sensiblement aligné avec la face intérieure d'une plaque de recouvrement (3, 30), en couvrant les murs, et en perçant les conduits cachés à travers la couverture.

2. Méthode selon la revendication 1, dans lequel les composants électriques définissent une profondeur minimale pour les conduits (4, 12, 18, 32, 37), **caractérisée par** la réduction de la profondeur de conduit à des éléments de construction qui se croisent.

3. Méthode selon la revendication 2, **caractérisée par** l'utilisation des organes réducteurs de conduit ayant une profondeur de conduit qui est inférieure à ladite profondeur minimale.

4. Méthode selon la revendication 3, **caractérisée par** le forage des conduits (4, 12, 18, 32, 37) à la plus grande profondeur.

5. Méthode selon la revendication 1, **caractérisée par** le forage des conduits (4, 12, 18, 32, 37) à travers une paire de ses côtés opposés qui sont essentiellement parallèles aux plaques de recouvrement (3, 30, 31).

6. Méthode selon les revendications 1 à 5, **caractérisée par** l'utilisation de deux couches de plaques de recouvrement (30, 31) si bien que le conduit (32) est essentiellement aligné avec la face intérieure de la plaque extérieure de ces plaques de recouvrement (30, 31).

7. Méthode selon les revendications 1 à 4, **caractérisée par** l'utilisation des montants en acier (1, 2, 11, 27, 28, 45, 46) qui présentent des dépressions locales (16, 29) pour recevoir un élément de conduit (4, 32) totalement ou partiellement.

8. Méthode selon les revendications 1 à 4, **caractérisée par** l'utilisation des montants en bois, et par la production d'une rainure dans le montant en bois pour recevoir un élément de conduit totalement ou partiellement.

9. Méthode selon les revendications 1 à 4, **caractérisée par** la réalisation d'un trou dans le montant entre ses côtés faisant face à la couverture, et par le montage d'un élément de conduit (18) dans le trou.

10. Méthode selon la revendication 9, dans lequel le montant est un montant en acier, **caractérisée par** l'utilisation d'un outil de coupe (20) ayant une entretoise pour fixer la hauteur de coupe-dessus du sol.

11. Méthode selon les revendications 1 à 10, **caractérisée par** l'utilisation des éléments de conduit ayant des longueurs modulaires qui sont adaptées aux distances mutuelles des éléments de construction.

12. Méthode selon les revendications 1 à 10, **caractérisée par** l'utilisation des éléments de conduit télescopiques.

13. Méthode selon la revendication 1, **caractérisée par** l'utilisation d'aimants dans les conduits pour le centrage du forage.

14. Méthode selon la revendication 1 ou 9, **caractérisée par** l'utilisation d'un gabarit pour percer des trous pour les cadres de montage.

15. Méthode selon la revendication 1, **caractérisée par** l'application sur le côté extérieur de la plaque de recouvrement (31) d'un marquage (33) à utiliser pour le forage.
